Europäisches Patentamt

(19) European Patent Office

Office européen des brevets

(11) Publication number: **0 113 944**
**B1**

(12) **EUROPEAN PATENT SPECIFICATION**

(45) Date of publication of patent specification: **27.04.88**

(51) Int. Cl.⁴: **G 01 V 1/30,** G 01 V 1/28

(21) Application number: **83300227.2**

(22) Date of filing: **18.01.83**

(54) **COMMON DEPTH POINT (CDP) SEISMIC EXPLORATION METHOD.**

(43) Date of publication of application:
**25.07.84 Bulletin 84/30**

(45) Publication of the grant of the patent:
**27.04.88 Bulletin 88/17**

(84) Designated Contracting States:
**BE DE FR GB IT NL**

(56) References cited:
**GB-A-1 594 633**

**GEOPHYSICS, vol. V, no. 2, April 1940, pages
115-133, Tulsa, Oklahoma, USA M.MUSKAT et
al.: "Reflections and transmission coeficients
for plane waves in elastic media"**

**GEOPHYSICS, vol. V, no. 2, April 1940, pages
149-155, Tulsa, Oklahoma, USA M.MUSKAT et
al.: "The seismic wave energy reflected from
various types of stratified horizons"**

**JOURNAL OF THE ACOUSTICAL SOCIETY OF
AMERICA, vol. 71, no. 4, April 1982, pages
871-878, Acoustical Society of America, New
York, USA A.G.Mckay et al.: " Compressional-
wave velocity measurement in seabed
materials by use of equipment deployed near,
but above the bottom"**

(73) Proprietor: **MOBIL OIL CORPORATION**
**150 East 42nd Street**
**New York New York 10017 (US)**

(72) Inventor: **Wiggins, Ralphe**
**Route 4, Box 549**
**New Fairfield Connecticut (US)**
Inventor: **Kenny, George Scott**
**2137 Siesta Drive**
**Dallas C. Texas 75224 (US)**
Inventor: **McClure, Carroll Dean**
**2916 Southwood**
**Dallas Texas 75223 (US)**

(74) Representative: **Cooper, John Anthony et al**
**Mobil Court 3 Clements Inn**
**London WC2A 2EB (GB)**

Courier Press, Leamington Spa, England.

**0 113 944**

**Description**

The present invention relates to a method of seismic exploration by means of the CDP technique.

One technique for gathering seismic information which has experienced success in the field of oil and gas exploration is the P-wave Common-Depth-Point (CDP) technique. The CDP technique is a method for obtaining multiple coverage of each subsurface point using various surface-detector and shot-point spreads. These spreads are selected so that for each spread the reflection points are common for several shot-receiver pairs. Recordings which have common reflection points are then typically combined, or stacked, after the appropriate travel-time corrections for shot-receiver separations have been applied. These techniques enhance reflections which follow the assumed travel path, while other events are reduced. The enhanced reflections may then be plotted in a seismic section which is a mapping of the reflectivity characteristics of the subsurface lithology. Compressional wave (P-wave) information comprises the predominant portion of these plots, but shear-wave information may also be included therein and may result in anomalies in the display.

The CDP technique has been developed and refined over at least the past forty years. Multiple paths centered around a common depth point had been suggested by 1938, (see Green, C. H. "Velocity Determinations by Means of Reflection Profiles", *Geophysics 3*:4 295—305 (1938)). By 1956, Mayne had proposed that information associated with a given reflection point, but recorded with a multiplicity of shot-point and geophone locations, could be combined algebraically after applying appropriate time corrections, (see "Common Reflection Point Horizontal Data Stacking Techniques" by W. Harry Mayne, *Geophysics 27*:6, 927—938 (1962)). Mayne describes these techniques as adding a "new order of magnitude" to the usable dimensions of multi-path pattern array geometry, and as providing signal-to-noise ratios enhanced well beyond the saturation point of conventional pattern methods. Mayne discloses that the horizontal spacing between source and receiver is restricted only by considerations of (1) the greatest distance which will permit coincidence adjustments of requisite accuracy (since the probable error in postulated step-out increases with distance and must be kept small with respect to the reflection), and (2) the greatest distance over which the reflected signals persist with adequate similarity.

The theoretical premise for the CDP technique is that the seismic event will be consistently reflected at various incidence angles from the common point of reflection for several different shot-receiver spacings. Theoretically it is assumed that each reflection point is located at a boundary between different media. By at least as early as 1899, C. G. Knott had published work on reflection, transmission, and conversion coefficients for plane elastic waves incident on a plane boundary between homogenous isotropic media. Knott defined reflection coefficients in terms of ratios of displacement potentials. His was one of the first explicit publications of the principle that satisfying the boundary conditions at an interface required in incident P (compressional) or SV (vertically polarized shear) wave to split into four parts: reflected P and SV wave and transmitted P and SV waves. Knott further disclosed an explicit expression for the energy in each wave, which, if the amplitude is known, must sum to the incident energy, (see Knott, C. G., "Reflexion and Refraction of Elastic Waves, with Seismological Applications", *Phil. Mag. S,* 5, Vol. 48, No. 290, July, 1899, pp. 64—96). By 1919, K. Zoeppritz had derived equations for reflection coefficients defined as ratios of displacement amplitudes, (see Zoeppritz, K. Über Reflexion und Durchgang seismischer Wellen durch Unstetigkeitsflächen", *Göttinger Nachrichten,* 1919, pp. 66—84). Unfortunately, the Zoeppritz equations are extremely complex. In fact, these equations are so complex that various authors have commented that the equations have seldom been published without error, (see Richter, C. F., "Elementary Seismology", W. H. Freeman and Company, 1958; Spencer, T. W. "The Method of Generalized Reflection and Transmission Coefficients", *Geophysics,* Vol. 25, No. 3, June, 1960, pp. 625—641). Perhaps one of the best papers on this topic written in recent times was authored by Tooley, R. D., Spencer, T. W., and Sagoci, H. F., entitled "Reflection and Transmission of Plane Compressional Waves", *Geophysics,* Vol. 30, No. 4, August, 1965, pp. 552—570. Tooley et al provide explicit expressions for the energy reflection coefficients of incident waves. Even this paper, however, contains an error at equation 5 where in the calculation of P+, the term "cos" should read "sin" (of alpha).

Since it has been recognized in theory that the amplitudes of shear and compressional reflectivities at a given boundary change with the angle of incidence (see *Geophysics,* Vol. V, No. 2, April 1940, pp. 115—133), attention in recent years has been directed to using such changes to determine the physical characteristics at the boundary. Shear-waves are produced in significant amplitudes by conversion at solid-solid boundaries at certain angles of incidence if there is a significant velocity contrast. For example, when a low-velocity layer is disposed over a higher-velocity layer, up to about 90% of the incident P-wave energy may be transmitted or reflected as P-waves for incident angles much smaller than the critical angle (e.g. less than about 25°), whereas a much larger fraction of the incident P-wave energy may be converted to shear wave energy for greater non-critical angles of incidence (e.g. about 30°—50°).

One of the reasons for interest in shear-wave reflectivities is the insensitivity of the shear-wave velocities to the fluid content of rocks. P-wave velocities may be strongly influenced by fluid content in high porosity rocks. Accordingly, if a data-gathering and display technique can be developed which will permit a convenient comparison between the P-wave and S-wave reflectivities of a given section, it may be possible to distinguish between areas which are more or less likely to contain hydrocarbon deposits.

In recent years it has been suggested that the nature of a reservoir fluid associated with a hydrocarbon

2

deposit can be predicted seismically. Experimentally, a shale layer overlaying a gas-saturated sandstone may cause an increase in reflection amplitude with source-receiver offset, while a water-saturated sandstone would show an amplitude decrease with offset. Theoretically, the amplitude vs. offset response for an oil-saturated sandstone response would be intermediate between those for gas and water. A conventional stacked CDP seismic section contains information about the vertical and lateral changes in the acoustic impedances of the subsurface. Normally, the correlation between a vertical-incidence P-wave reflection-coefficient series convolved with a time-invariant seismic wavelet and the amplitudes of stacked seismic data is adequate for conventional hydrocarbon analysis. However, CDP gathers of seismic traces also contain information about the dependence of the reflection amplitude on the incidence angle of the wave front.

There are some inherent limitations to the detection of amplitude changes associated with oblique-angle reflections. Amplitude dependence on incidence angle exists in the seismic field system itself, in the propagation of the seismic wave, and in the geologic reflection response. In connection with prior CDP techniques, practitioners have already developed a number of techniques which are intended to minimize field system and wave front propagation limitations. For example, it is known to compensate for differences in amplitude loss and phase distortion as the emergent angle of a wave front increases, (see Hawes et al "Some Effects of Spatial Filters on Signal", *Geophysics* 39:4, pp. 464—498, 1974). It is also known that the propagation of a seismic wave front introduces a time-variant gain into the field data due to geometrical divergence and attenuation. The amplitude offset dependence for these effects can be related to the normal moveout equation which defines the travel-time to a reflection as a function of offset for conventional spread lengths. The divergence correction compensates the reflection amplitude for geometrical spreading losses, so that the corrected reflection amplitudes simulate the response to a plane-wave source, (see Newman, P., "Divergence Effects in a Layered Earth", *Geophysics* Vol. 38, No. 3, pp. 481—488, 1973). Similarly, attenuation due to intra-bed multiples and absorption is generally accepted to be a constant, independent of frequency in the seismic passband, such that amplitudes of reflections decrease with increasing travel-time, approximately as 1/T. In conducting most CDP analyses, a basic assumption about the CDP gather is that all traces impinge upon the same subsurface point whose reflection response may be observed at 2-way travel-times defined by a hyperbolic NMO function. Normal moveout functions are generally based on reasonable velocity estimates for the given substrate. Accordingly, in CDP gathers, including those processed to determine changes of amplitude with offset, it is known to use conventional demultiplexing, programmed gain control, band-pass filtering, deconvolution, wavelet compression, normal moveout corrections, trace-amplitude equalization and muting. Trace amplitude equalization, and other normalizations, are often conducted using a mean or median trace amplitude as determined from some predetermined, non-event associated time window. In determining amplitude-offset changes, it is further known to use trace muting to eliminate amplitude data collected at the critical angle, which data would otherwise unnecessarily interfere with the desired amplitude vs. offset determinations.

The Zoeppritz equations have now been analyzed to determine a simple analytical estimation for the solution of the Zoeppritz-equation reflection coefficients $R_{pp}$ (theta) and $R_{ps}$ (theta), where $R_{pp}$ refers to the reflection coefficient for an incident and reflected compressional waves and $R_{ps}$ refers to the coefficient for an incident compressional wave and a reflected shear wave, when the angle of incidence $\theta$, is a small quantity, i.e., less than about 30°. This analysis has shown that the reflection coefficient $R_{pp}$ (theta) for a reflection at an interface between a medium 1 and a medium 2 can be estimated according to the following formula for such angles of incidence:

$$R_{pp}(\theta) \cong \widetilde{R}_{pp}(\theta) = R_{pp,0} + R_{pp,1} \sin^2\theta \tag{1}$$

where the coefficient for normal incidence reflection and the first order Taylor expansion are shown in equations (2) and (3) respectively:—

$$R_{pp,0} = \frac{1-KY}{1+KY} = \frac{\rho_1 V_{p1} - \rho_2 V_{p2}}{\rho_1 V_{p1} + \rho_2 V_{p2}} \tag{2}$$

and

$$R_{pp,1} = -2V^2(1-K)$$

$$\frac{-Y}{1+Y}(1-Y) \tag{3}$$

$$-2V^2(1+V-Z)[1-\left(\frac{Z}{V}\right)^2]$$

# 0 113 944

where

$$K = \frac{\rho_2}{\rho_1} \cdot \text{ and } \rho_1, \rho_2 \text{ are the densities of media 1 and 2 respectively;}$$

$$Y = \frac{V_{p2}}{V_{p1}} \text{ and } V_{p1}, V_{p2} \text{ are the velocities of compressional waves in media 1 and 2 respectively;}$$

$$V = \frac{V_{s1}}{V_{p1}} \text{ and } V_{s1} \text{ is the velocity of shear-waves in medium 1;}$$

and

$$Z = \frac{V_{s2}}{V_{p1}} \text{ and } V_{s2} \text{ is the velocity of shear-waves in medium 2.}$$

Note that $R_{pp,1}$ in (3) is expanded in terms of

$$(1 - \frac{\rho_2}{\rho_1}),$$

$$(1 - \frac{V_{p2}}{V_{p1}})$$

and

$$(1 - \frac{V_{s2}^2}{V_{s1}^2}).$$

so that

$$R_{pp,1} = 2\frac{V_{s1}^2}{V_{p1}^2} (1 - \frac{\rho_2}{\rho1})$$

$$+ \frac{V_{p2}/V_{p1}}{1 + V_{p2}/V_{p1}} (1 - \frac{V_{p2}}{V_{p1}}) \qquad (4)$$

$$+ 2\frac{V_{s1}^2}{V_{p1}^2} (1 + \frac{V_{s1}}{V_{p1}} - \frac{V_{s2}}{V_{p1}}) (1 - \frac{V_{s2}^2}{V_{s1}^2})$$

If the elastic parameters are rewritten as:

$$\begin{array}{ll} \rho_1 = \rho & \rho_2 = \rho + \Delta\rho \\ V_{p1} = V_p & V_{p2} = V_p + \Delta V_p \\ V_{s1} = V_2 & V_{s2} = V_s + \Delta V_s \end{array} \qquad (5)$$

and it is assumed that delta rho, delta $V_p$ and delta $V_s$ are small enough so that second order terms can be ignored and that $V_p$ is approximately equal to $2V_s$, then the reflection coefficient becomes:

$$R_{pp} = \frac{1}{2} (\frac{\Delta\rho}{\rho} + \frac{\Delta V_p}{V_p}) - \frac{1}{2} (\frac{\Delta\rho}{\rho} + \frac{\Delta V_p}{V_p} + \frac{2\Delta V_s}{V_s}) \sin^2\theta \qquad (6)$$

$$= R_{pp,0} + R_{pp,1} \sin^2\theta$$

It has now been recognized that separate estimates of $R_{pp,0}$ and $R_{pp,1}$ can provide values for normal incidence compressional-wave reflectivity $R_{pp,0}$ and shear-wave reflectivity $\Delta V_s/V_s$, and that this latter shear-wave reflectivity value is approximately equal to $(R_{pp,0} + R_{pp,1})$.

4

Similarly, the P—SV reflection coefficient is

$$R_{PS}(\theta) \cong \widetilde{R}_{ps}(\theta) \tag{7}$$

$$= (\sin \theta) \left[ \frac{4 (V-KZ)}{1+KY} + (1-K) \left( \frac{2 KZ}{V+KZ} \right) \cdot \frac{(Y-2Z)}{(1+KY)} \right]$$

where the first term is proportional to $(p_1 V_{s1} - p_2 V_{s2})$ and the second term to $(1-p_2/p_1)$.

The present invention provides a method of seismic exploration in which the compressional- and shear-wave reflectivities of geologic formations are determined and displayed using a P-wave CDP seismic data gathering technique. This method comprises collecting a CDP P-wave gather for a plurality of angles of incidence (theta) of less than 30° characterized by (a) estimating the values of $\sin^2$ (theta) for each angle of incidence; (b) fitting a linear function to the amplitudes vs. $\sin^2$ (theta) for a plurality of points of reflection within the gather; (c) determining the coefficients of the linear function; (d) estimating the values of shear-wave and compressional-wave reflectivities of the points of reflection from the coefficients; and (f) displaying the values in a display configured to generally correspond to a section of the geological formation.

A preferred method takes advantage of the fact that constants $R_{pp,0}$ and $R_{pp,1}$ are the linear coefficients for the Taylor expansion of the reflection coefficient $R_{pp}$. By limiting the angles of incidence at which data from CDP gather is utilized, by estimating the values of $\sin^2$ (theta) for each such angle in the gather, and by fitting a linear function to the measured amplitudes vs. $\sin^2$ (theta) for each reflection point, the estimated values of $R_{pp,0}$ and $R_{pp,1}$ are easily determined. By recognising that the sum of the linear coefficients ($R_{pp,1}$ and $R_{pp,0}$) is a value representative of the shear-wave reflectivities ($\Delta V_s/V_s$) of the reflection points, the present method provides a simple technique for determining and plotting such reflectivities. Since one of the coefficients ($R_{pp,0}$) is representative of the compressional wave reflectivity of each reflection point, a normal incidence P-wave plot is also easily produced. A useful method is thus provided for plotting sections of geologic formations to determine the possible presence of hydrocarbons therein.

In accordance with the preferred method described above, estimation of the value of $\sin^2$ (theta) for any given angle theta is conducted by estimating the depth of the reflection point using the measured time for each sample and the normal moveout (NMO) velocity. Shot-receiver distances are then used to achieve a $\sin^2$ (theta) estimation for each incidence angle. Using the $\sin^2$ (theta) estimations thus determined, a linear function regression is performed, which is preferably a least-square regression of $R_{pp,0} + R_{pp,1} \sin^2$ (theta) given the observed amplitudes. Repeating this step for each time (reflection) point of the CDP gather (and each CDP in the line), values of the normal incidence P section ($R_{pp,0}$) and of the normal incidence shear section ($R_{pp,0} + R_{pp,1}$) can then be readily displayed for all the points in the gather.

In the accompanying drawings,

Figure 1 is a normal incidence P-section plot of the compressional wave behavior of a given geologic formation generated in accordance with a method according to one example of the present invention; and

Figure 2 is an equivalent shear section display of the geologic formation which was the subject of Figure 1, displaying shear-wave reflectivities of that formation.

Referring to the drawings, in the method of said one example, compressional- and shear-wave reflectivities of a geologic formation are determined and displayed using a CDP seismic data gathering technique comprising normal processing up to the point of stacking the CDP gathers. Such processing normally includes demultiplexing, programmed gain control, band-pass filtering, deconvolution, wavelet compression, normal moveout correction, trace amplitude equalization, and muting. The trace amplitude equalization is generally based on the mean or median trace amplitude as determined from a preselected time window which does not necessarily correspond to a signal arrival. Since the result may be very sensitive to muting, the method of the present invention should be used only for near vertical-incidence reflections, that is, for incidence angles less than 30°, and preferably less than 20°, to thereby avoid the necessity of including higher order terms. Similarly, when velocity increases at a boundary, there will be a critical-angle reflection that is always a high-amplitude reflection. Accordingly, muting should be used to eliminate such phenomena from the CDP gathers. Similarly, visual examination of traces suggests that far traces are often distorted by the presence of non-compressional wave primary reflections and multiple reflections and should preferably be removed by an appropriate muting.

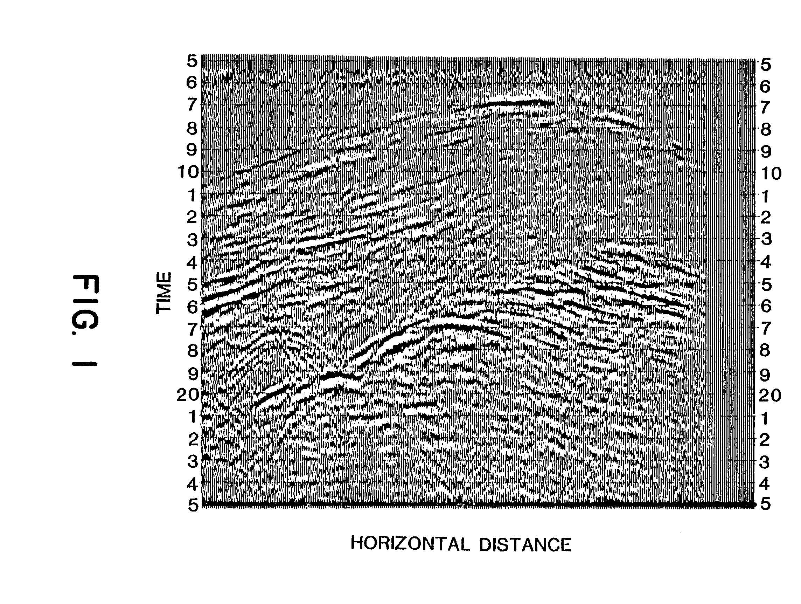

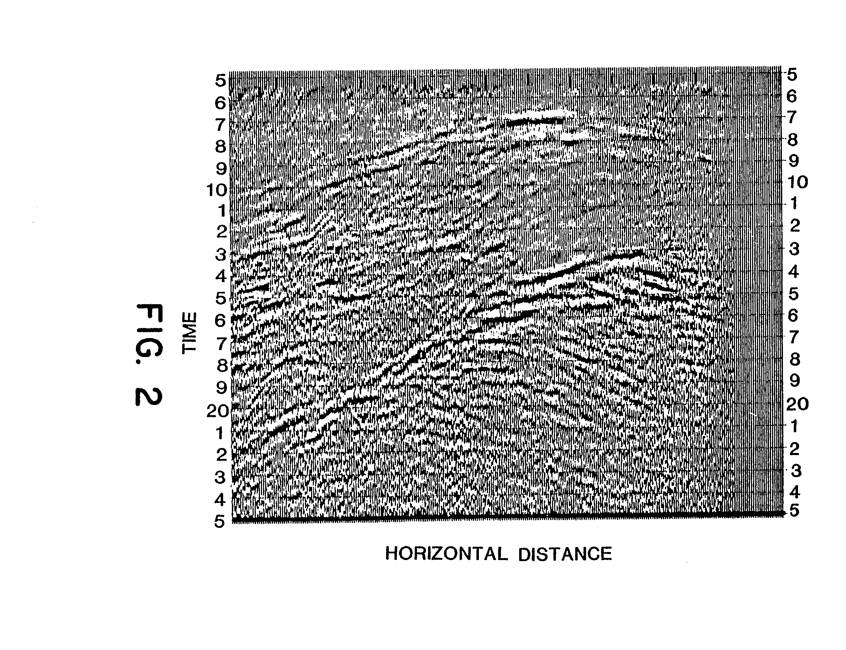

CDP gathers are gathers of compressional seismic information containing the reflectivities of points in a geologic formation which are disposed along a usually vertical axis which bisects the distance between shot and receiver locations. In such CDP gathers, the depth along this vertical axis is typically indicated in terms of time rather than actual physical depth below ground surface. Thus, in Figures 1 and 2, the vertical axis of the sections represents time, while the horizontal axis corresponds to actual physical location. In the present method, it is desired to estimate the actual physical depth of each reflection point along the above-mentioned vertical axis. One of the easiest methods for making such an estimation is to use the velocity assumption used in the normal-moveout function which when multiplied by the reference time and divided by two provides a reasonable estimation of the depth (d) of the point of reflection. Assuming

**0 113 944**

the distance between shot and receiver to be X, and theta to be the angle of incidence between the receiver and the aforementioned vertical axis, an estimate of $\sin^2$ (theta) can be calculated using the formula:

$$\sin^2 \text{(theta)} = X^2/(X^2 + 4d^2) \tag{8}$$

This method for estimating the value of $\sin^2$ (theta) assumes a homogenous lithology above the point of reflection. Moreover other approximations can be made for propagation velocities and $\sin^2$ (theta), particularly if it is desired to utilize information concerning the geologic layers which may be disposed above the point of reflection. Having thus estimated the value of $\sin^2$ (theta) for each time sample of the normal-moveout corrected traces, these values are then used to perform a least-squares regression of $R_{pp,0} + R_{pp,1} \sin^2$ (theta) to the measured amplitudes. This regression technique may be visualized as being equivalent to plotting the measured amplitudes against $\sin^2$ (theta), and then fitting a line to the plotted points, whereupon $R_{pp,0}$ is defined by the point wherein the line intersects the amplitude axis (theta=0), and $R_{pp,1}$ represents the slope of the line.

By repeating this step for each time of the CDP gather and each CDP gather in the line, values for $R_{pp,0}$ and $R_{pp,1}$ can be obtained for each reflection point in the section. This information is then assembled for presentation into a display as a normal-incidence P-reflectivity section ($R_{pp,0}$ points) and as a shear-reflectivity section ($R_{pp,0} + R_{pp,1}$ points).

Figure 1 represents such a normal incidence P section which is a display of the compressional reflectivity behavior of a particular geologic formation. Figure 2 is an equivalent display of the shear-wave reflectivities of that geologic formation. It will be seen that substantial differences in such reflectivities are present between such sections which will substantially aid an interpreter of this data in determining the likelihood that a given location in this section contains a possible hydrocarbon deposit.

While those of ordinary skill in this art will further recognize that the above-described technique is theoretically less accurate than a technique wherein the Zoeppritz formulas are used in their entireties to represent and display collected data, the large volume of data to be processed, the complexity of the Zoeppritz formulas and the difficulties otherwise encountered in applying the Zoeppritz formulas make the present technique superior to any data gathering, interpretation, presentation and plotting method heretofore known to the art.

It will also be recognized that techniques other than the above-mentioned least-squares regression technique may be used to fit a linear function to the measured amplitudes. For most applications, however, the ease and simplicity of performing a least-squares regression makes this the method of choice.

**Claims**

1. A method for the seismic exploration of a geological formation using a compressional common-depth-point seismic data gathering technique, comprising collecting a common-depth-point gather for a plurality of angles of incidence (theta) of less than 30°, characterised by
   (a) estimating the values of $\sin^2$ (theta) for each angle of incidence;
   (b) fitting a linear function to the amplitudes vs. $\sin^2$ (theta) for a plurality of points of reflection within the gather;
   (c) determining the coefficients of the linear function;
   (d) estimating the values of shear-wave and compressional-wave reflectivities of the points of reflection from the coefficients; and
   (f) displaying the values in a display configured to generally correspond to a section of the geological formation.

2. The method of claim 1, wherein the angles of incidence are less than about 20°.

3. The method of claim 1 or claim 2, wherein the values of $\sin^2$ (theta) are estimated by estimating the depth (d) of each point of reflection at a given time.

4. The method of claim 3, wherein the $\sin^2$ (theta) values are estimated by using the formula

$$\sin^2 \text{(theta)} = X^2/(X^2 + 4d^2)$$

where X equals the distance between the shot and receiver positions at the time.

5. The method of any preceding claim, wherein the shear-wave reflectivities are determined using the least squares regression of $R_{pp,0} + R_{pp,1} \sin^2$ (theta) on the measured amplitudes, and wherein each shear-wave reflectivity value is determined by summing $R_{pp,0}$ and $R_{pp,1}$, $R_{pp,0}$ and $R_{pp,1}$ being the linear coefficients for the Taylor expansion of the reflection coefficient $R_{pp}$.

**Patentansprüche**

1. Verfahren zur seismischen Erkundung einer geologischen Formation unter Verwendung eines verdichtenden Sammelverfahrens seismischer Daten mit gemeinsamem Tiefenpunkt, welches die Sammlung einer Zusammenstellung gemeinsamer Tiefenpunkte für eine Vielzahl von Einfallswinkeln (Theta) von weniger als 30° umfasst, gekennzeichnet durch

6

(a) Schätzung der Werte von sin² (Theta) für jeden Einfallswinkel;

(b) Anpassen einer linearen Funktion an die Amplituden gegenüber sin² (Theta) für eine Vielzahl von Reflexionspunkten innerhalb dieser Zusammenstellung;

(c) Bestimmung der Koeffizienten dieser linearen Funktion;

(d) Schätzung der Werte des Scherwellen- und Druckwellen-Reflexionsvermögens der Reflexionspunkte von diesen Koeffizienten; und

(f) Darstellung dieser Werte in einer Darstellung, die so zusammengestellt ist, dass sie im allgemeinen einem Abschnitt dieser geologischen Formation entspricht.

2. Verfahren nach Anspruch 1, worin the Einfallswinkel kleiner als etwa 20° sind.

3. Verfahren nach Anspruch 1 oder 2, worin die Werte von sin² (Theta) durch Schätzen der Tiefe (d) jedes Reflexionspunktes bei einem gegebenen Zeitpunkt geschätzt werden.

4. Verfahren nach Anspruch 2, worin die Werte sin² (Theta) unter Verwendung der Formel

$$\sin^2\ (\text{Theta}) = X^2/(X^2 + 4d^2)$$

geschätzt werden, worin X dem Abstand zwischen den Abschuss- und Empfangspositionen zu diesem Zeitpunkt gleicht.

5. Verfahren nach einem der vorstehenden Ansprüche, worin Scherwellenreflexionsvermögen unter Verwendung der kleinsten Quadrate der Regression von $R_{pp,0} + R_{pp,1}$ sin² (Theta) auf den gemessenen Amplituden bestimmt wird und worin jeder Wert des Scherwellenreflexionsvermögens durch Summierung von $R_{pp,0}$ und $R_{pp,1}$ bestimmt werden, wobei $R_{pp,0}$ und $R_{pp,1}$ die linearen Koeffizienten für die Taylor-Ausbreitung des Reflexionskoeffizienten $R_{pp}$ darstellen.

**Revendications**

1. Procédé d'exploration sismique d'une formation géologique utilisant une technique de saisie de données sismiques à point de profondeur commun par compression, consistant à recueillir une saisie de point de profondeur commun pour plusieurs angles d'incidence (theta) de moins de 30°, caractérisé en ce qu'il consiste:

(a) à estimer les valeurs de sin² (theta) pour chaque angle d'incidence;

(b) à ajuster une fonction linéaire aux amplitudes en fonction de sin² (theta) pour plusieurs points de réflexion à l'intérieur de la saisie;

(c) à déterminer les coefficients de la fonction linéaire;

(d) à estimer les valeurs des pouvoirs de réflexion d'ondes de cisaillement et d'ondes de compression des points de réflexion à partir des coefficients; et

(e) à afficher les valeurs en un affichage configuré pour correspondre de façon générale à une section de la formation géologique.

2. Procédé selon la revendication 1, dans lequel des angles d'incidence sont inférieurs à environ 20°.

3. Procédé selon la revendication 1 ou la revendication 2, dans lequel les valeurs de sin² (theta) sont estimées en estimant la profondeur (d) de chaque point de réflexion à un instant donné.

4. Procédé selon la revendication 3, dans lequel les valeurs de sin² (theta) sont estimées en utilisant la formule:

$$\sin^2\ (\text{theta}) = X^2/(X^2 + 4d^2)$$

où X est égal à la distance entre les positions de minage et de récepteur à l'instant.

5. Procédé selon l'une quelconque des revendications précédentes, dans lequel les pouvoirs de réflexion d'ondes de cisaillement sont déterminés en utilisant la régression aux moindres carrés de $R_{pp,0} + R_{pp,1}$ sin² (theta) sur les amplitudes mesurées et dans lequel chaque valeur de pouvoir de réflexion d'ondes de ci-saillement est déterminée en additionnant $R_{pp,0}$ et $R_{pp,1}$, $R_{pp,0}$ et $R_{pp,1}$ étant les coefficients linéaires du développement de Taylor du coefficient de réflexion $R_{pp}$.

FIG. 1

FIG. 2

TIME

HORIZONTAL DISTANCE